# EUROPEAN PATENT SPECIFICATION

(11) **EP 2 060 624 B1**
(45) Date of publication and mention of the grant of the patent: **04.01.2012**
(21) Application number: 07425719.7
(22) Date of filing: 13.11.2007
(51) Int. Cl.: C12G 1/026

(54) **Cap breaking apparatus for any pressed vegetal product**
Vorrichtung zur Brechung von einer Kappe für jedes verdichtete pflanzliche Produkt
Appareil de coupure de chapeau pour produit végétal comprimé

(43) Date of publication of application: 20.05.2009
(73) Proprietor: L.A.S.I. s.r.l., 30020 Meolo (Venezia) (IT)
(72) Inventor: Crosato, Remo, 31048 San Biagio di Callalta (Treviso) (IT)
(74) Representative: Citron, Massimiliano

(56) References cited:
- EP-A- 0 347 487
- EP-A- 0 916 723
- DE-A1- 2 401 764
- DE-A1- 3 629 575
- FR-A- 2 318 928
- FR-A- 2 778 411
- DATABASE WPI Week 198336 Thomson Scientific, London, GB; AN 1983-757692 XP002476548 & SU 971 873 A (PRODUCTION PROC AUT) 7 November 1982 (1982-11-07)

## Description

The invention relates to an apparatus for plunging the cap of any pressed vegetable product. The description which follows will refer by way of example to vinification, a sector in which the invention has proved to be particularly effective.

During fermentation of the must a cap of marc forms above the must, only the immediately underlying layer of which permeates it. There is no contact with the remainder of the must, this resulting even in the accumulation of yeast on the bottom of the must-containing tank without it taking part in the wine conversion processes, with the consequent risk of unpleasant-tasting sulphurous compounds being produced. Consequently it is required to break up periodically the cap.

A system for breaking up the cap using a plunger is well known. Using a plunger is the modem variant of the traditional method of immersing the cap of marc in the must using wooden implements or the like and consists of a (normally compressed-air) piston or a rack which pushes a blade or a disk or a set of vanes, etc., onto the top of the cap of marc, so as to break it up and immerse it in the must.

The known variants of the vinification system using plungers are as follows:
- fixed plungers mounted permanently on the roof of the vinification tank;
- plungers which are fixed during the fermentation stage, but may be removed afterwards owing to releasable fixing using screws or clamps or the like onto the top of the tank if without a roof (so-called floating-lid tank) or onto a manhole cover;
- movable plungers which serve one or more vinification tanks and are normally arranged on a carriage sliding on a rail fixed to the ceiling of the wine cellar and (obviously) above the corresponding tanks or on a frame structure fixed to the floor.

The first type increase the constructional complexity of the vinification device, the second type involve inconvenient maintenance and disassembly work at the end of the working process, and the third type are very costly and complex to produce (involving the entire wine cellar). A known device for plunging is described in FR 2, 778, 411 comprising the features of the pre-characterizing portion of claim 1.

The object of the present invention is to provide a apparatus for plunging the cap which is different from the prior apparatuses and which does not have the problems associated with them.

This object is achieved with an apparatus or tank for plunging the cap of any pressed vegetable product, preferably must, as defined in claim 1.

Preferably, the apparatus comprises non-permanent fixing means for fixing the guiding means onto the top of the apparatus in such a way that they may be removed. It is thus possible, if necessary, to free the tank, for example in order to move it more easily.

Preferred variants of the invention which may be produced singly or in combination are as follows:
- said guiding means have an extension which is greater than the plan dimensions of the tank so that they are able to connect the top of one or more aligned tanks, allowing the cap-plunging unit to travel from one tank to another and/or reach a raised point;
- the apparatus comprises motor means for servo-assisting the vertical movement of the plunger rod;
- the apparatus comprises motor means which are mounted on said unit so as to be able to displace it mechanically;
- the apparatus comprises a programmable device which is able to operate the motor means so as to displace said unit automatically and/or with predefined movements and/or is able to operate the means for servo-assisting the plunger rod;
- the apparatus comprises a top manhole cover and an actuating means connected to a lever or multiple-lever mechanism for opening/closing said manhole cover.

The advantages of the invention are as follows:
a) the possibility of rendering the guide rail independent of the wine cellar ceiling. The ceiling often has a height which is unsuitable for the rail mounting requirements, or cannot withstand the weight and the thrusting forces of the structure which supports the rail, or is crossed by load-bearing beams or has particularly complex arches which often make installation of the rail impossible;
b) the construction of rail support frames and structures, or structures which are fixed to the floor and are very costly, is avoided;
c) the possibility, if the invention is applied singly to each tank (of a set of vinification tanks), of displacing both the tank and the mobile cap-plunging unit without problems, positioning it elsewhere;
d) during operation, the cap-plunging unit, which presses on the cap of marc with loads sometimes of a considerable nature, forms a single body together with the tank, even though the cap-plunging unit is movable and therefore the thrusting forces of the cap-plunging unit and the associated reaction of the tank are counterbalanced, without affecting the floor and ceiling;
e) with the apparatus according to the invention the design of a cap-plunging system movable along rails is completely independent of the structural design of the wine cellar floors and ceiling;
f) the costs of installing the rails are reduced since the rails are prefabricated at the factory and then simply mounted in situ after positioning the tanks.

It can be seen that the invention combines the advantages of a cap-plunging system movable along rails of the conventional ceiling or floor type with the advantages of the system comprising plungers which are fixed (both permanently and removably) on the roof of the vinification devices.

Preferred embodiments of the invention will now be described with reference to the accompanying drawing in which:
Fig. 1 shows a front view of a vinification device;
Fig. 2 shows a side view of the vinification device according to Fig. 1;
Fig. 3 shows a cap-plungin unit of the vinification device according to Fig. 1;
Fig. 4 shows a front view of a variant of the vinification device;

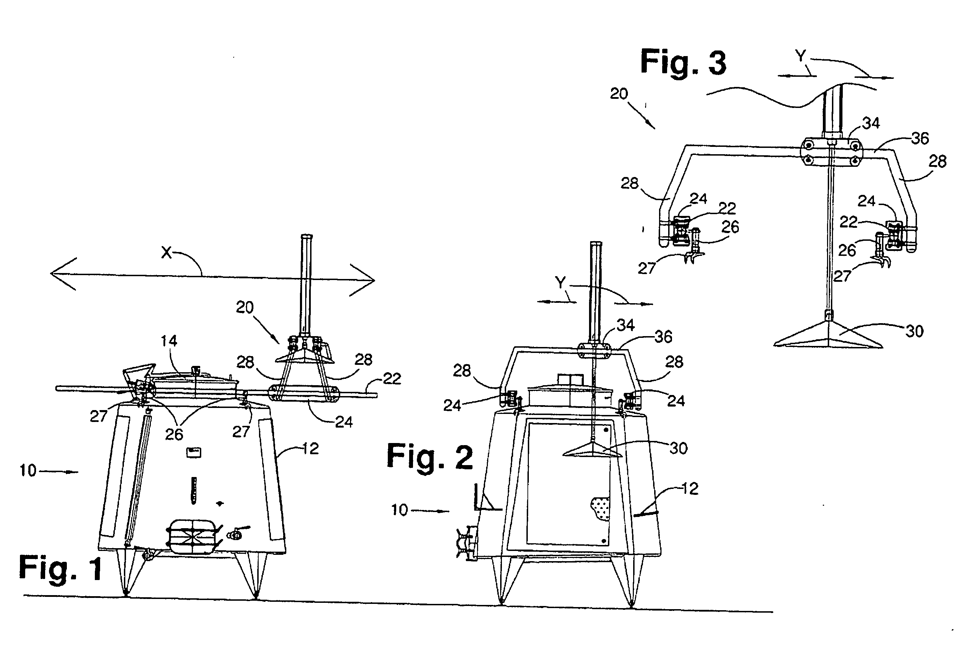

Fig. 1 shows a vinification device 10 which comprises a tank 12 on the convex top part of which two rails 22 for a cap-plunging unit 20 are fixed in a parallel and horizontal manner, symmetrically one on either side of the tank 12 along the sides of a manhole cover 14.

Fixing of the rails 22 to the tank 12 is performed by means of four socles 26 (which may or may not be articulated) having at the bottom mounting claws or hooks 27 by means of which they rest firmly without slipping on the top surface of the tank 12. Preferably the socles 26 are adjustable heightwise and/or may be lengthened so as to perform level positioning of the rails 22, and the direction of the claws 27 may be adjusted.

Two identical sliding units or carriages 24 are mounted slidably on the rails 22, one on either side, and each have four roller wheels, each of which engage with a rail 22. The two sliding units 24 have, fixed thereon, two support arches 28 with a horizontal upper section 36 on which a carriage 34 supporting a plunger rod 30 which may be lowered is slidably mounted.

As a result, the rod 30 has overall the possibility of moving horizontally (see arrow X) above the tank 12 and also along the arch 28 (see arrow Y). The rod 30 may thus be positioned, moving along the section 36, above the inlet mouth of the tank 12 so as to be lowered inside it (see Fig. 2).

In order to increase the space available for an operator in the vicinity of the manhole cover 14, the rails 22 are joined to the socles 26 towards the outer part of the tank 12; similarly the arches 28 are fixed to the carriages 24 towards the outer part of the tank 12.

The carriages 24 or 34 may be motor-driven and remotely controlled by a processing unit (for example a PLC) to perform programmed movements. The vertically movable rod 30 may also be servo-assisted and remotely controlled. It is thus possible to perform completely automated plunging operations.

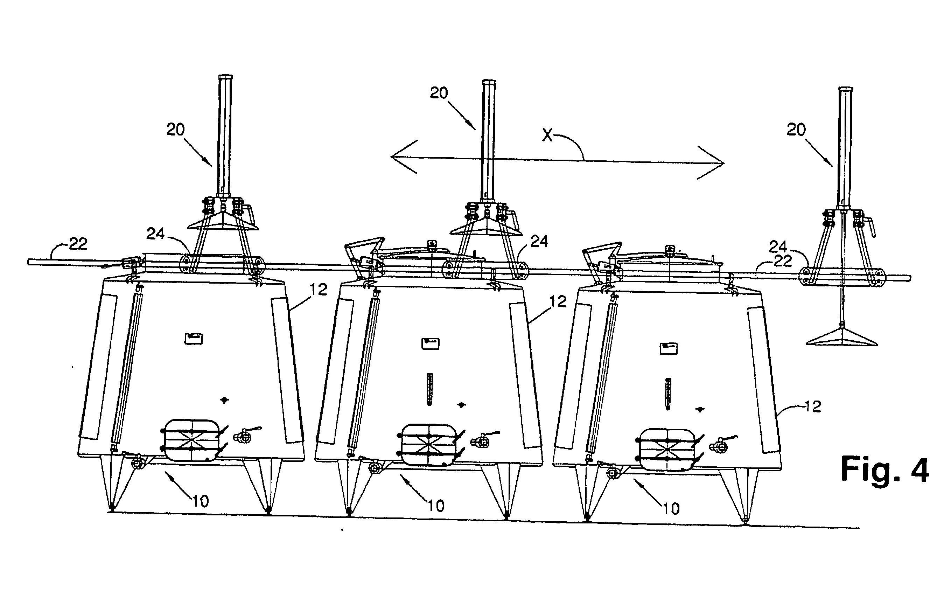

Fig. 4 shows a variant of the invention. The same reference numbers are used for similar parts.

Now the rails 22 have been lengthened and fixed, in the manner already described, onto several tanks 12 arranged in a row so as to be able to cover with the horizontal travel movement of the cap-plunging unit 20 all the tanks 12. Fig. 4 shows different positions of the unit 20. It should be noted that it is also possible to use several plunging units movable along the rails 22 in order to serve the tanks 12 more quickly.

As described, it is possible to achieve completely automated plunging operations also for a set of aligned tanks 12, with a high level of productivity.

## Claims

1. Apparatus or tank for plunging the cap of any pressed vegetable produce preferably must, comprising susbstantially horizontal guiding means fixed to the top of the apparatus or tank and able to support slidably a cap-plunging unit.
**characterized in that** said guiding means comprise two horizontally arranged rails.

2. Apparatus according to Claim 1, comprising non-permanent fixing means for fixing the guiding means onto the top of the apparatus in such a way that they may be removed.

3. Apparatus according to any one of the preceding claims, in which said guiding means have an extension which is greater than the plan dimensions of the tank so that they are able to connect the top of two ormore aligned tanks, allowing the cap-plunging unit to travel from one to the other and/or reach a raised point.

4. Apparatus according to Claims 3, comprising, for supporting the rail (22), socles (26) which may or may not be articulated and have at the bottom mounting claws or hooks (27) by means of which they rest firmly without slipping on the top surface of the tank (12).

5. Apparatus according to Claim 4, in which the socles (26) are adjustable heightwise and/or can be lengthened so as to perform level positioning of the rails (22).

6. Apparatus according to Claim 5, in which the rails (22) have, slidably mounted thereon, two identical carriages (24) which are fixed to at least one support arch (28) on which a carriage (34) which supports a plunger rod (30) which can be lowered is slidably mounted.

7. Apparatus according to any one of the preceding claims, comprising means for servo-assisting the vertical movement of the plunger rod.

8. Apparatus according to any one of the preceding claims, comprising motor means mounted on said unit.

9. Apparatus according to Claim 7 or 8, in which a programmable device is able to control the motormeans so as to displace automatically and/or with predefined movements said unit and/or control the means for servo-assisting the plunger rod.

## Patentansprüche

1. Vorrichtung oder Behälter zum Mischen eines beliebigen pflanzlichen Produkts in Form von Maische, vorzugsweise Most, mit im Wesentlichen horizontal ausgerichteten Führungen, die auf der Spitze der Vorrichtung oder des Behälters befestigt sind und ein Mischaggregat verschiebbar lagern, **dadurch gekennzeichnet, dass** die besagten Führungen zwei horizontal angeordnete Schienen umfassen.

2. Vorrichtung nach Anspruch 1, umfassend nicht permanente Befestigungsmittel, um die Führungen auf der Spitze der Vorrichtung zu fixieren und diese auch wieder entfernen zu können.

3. Vorrichtung nach einem der vorhergehenden Ansprüche, bei welcher die besagten Führungen über den Grundriss des Behälters hinausragen, sodass sie die Spitzen von zwei oder mehreren ausgerichteten Behältern verbinden können, damit das Mischaggregat von einem Behälter zum anderen gleiten und/oder eine höher gelegene Stelle erreichen kann.

4. Vorrichtung nach Anspruch 3, bei welcher die Schienen (22) von Sockeln (26), mit oder ohne Gelenk, getragen werden, die unten mit Abstellklauen oder -haken (27) versehen sind, mit denen die Vorrichtung sicher und verrutschfest auf der oberen Fläche des Behälters (12) aufgesetzt werden kann.

5. Vorrichtung nach Anspruch 4, bei welcher die Sockel (26) höhenverstellbar und/oder verlängerbar sind, um die Schienen (22) exakt waagrecht auszurichten.

6. Vorrichtung nach Anspruch 5, bei welcher zwei gleiche Schlitten (24) beweglich und verschiebbar auf den Schienen (22) montiert sind, wobei die Schlitten an mindestens einem Stützbogen (28) befestigt sind, auf dem ein kleiner Wagen (34) verschiebbar montiert ist, der einen absenkbaren Mischstab (30) trägt.

7. Vorrichtung nach einem der vorhergehenden Ansprüche, die Einrichtungen zur Unterstützung der vertikalen Bewegung des Mischstabs umfasst.

8. Vorrichtung nach einem der vorhergehenden Ansprüche, die auf dem besagten Aggregat montierte Motoren umfasst.

9. Vorrichtung nach Anspruch 7 oder 8, bei welcher ein programmierbares Gerät die Motoren steuert, um besagten Aggregat automatisch und/oder mit vorbestimmten Bewegungen zu verschieben und/oder um die Einrichtungen zur Unterstützung des Mischstabs zu bedienen.

## Revendications

1. Appareil ou réservoir pour le traitement de foulage de tout produit végétal sous forme de produit pressé, de préférence du moût, comprenant des moyens de guidage essentiellement horizontal fixés sur le sommet de l'appareil ou réservoir et en mesure de supporter un groupe de foulage en permettant son coulissement, **caractérisé par le fait que** ces moyens de guidage comprennent deux rails disposés horizontalement.

2. Appareil selon la revendication 1, comprenant des moyens de fixation non permanente permettant de fixer les moyens de guidage sur le sommet de l'appareil, en rendant ces derniers amovibles.

3. Appareil selon l'une quelconque des revendications précédentes, dans lequel ces moyens de guidage ont une extension supérieure au plan du réservoir, de façon à être en mesure de relier le sommet de deux ou plusieurs réservoirs alignés, en permettant au groupe de foulage de coulisser d'un à l'autre et/ou d'atteindre un point surélevé.

4. Appareil selon la revendication 3, comprenant, pour soutenir les rails (22), des sabots (26), articulés ou non, dotés dans leur partie inférieure de griffes ou de crochets d'appui (27) grâce auxquels ils peuvent reposer solidement, sans glisser, sur la surface supérieure du réservoir (12).

5. Appareil selon la revendication 4, dans lequel les sabots (26) sont réglables en hauteur et/ou allongeables, de manière à calibrer le niveau des rails (22).

6. Appareil selon la revendication 5, dans lequel sont montés sur les rails (22), en étant mobiles et coulissants, deux trains identiques (24) qui sont fixés à au moins un arceau de support (28), sur lequel est monté un chariot coulissant (34) supportant un pilon abaissable (30).

7. Appareil selon l'une quelconque des revendications précédentes, comprenant des moyens pour servo-assister le mouvement vertical du pilon.

8. Appareil selon l'une quelconque des revendications précédentes, comprenant des moyens moteurs montés sur ce groupe.

9. Appareil selon la revendication 7 ou 8, dans lequel un dispositif programmable est capable de commander les moyens moteurs de manière à déplacer ce groupe automatiquement et/ou selon des mouvements préétablis et/ou capable de commander les moyens permettant de servo-assister le pilon.
